# EUROPÄISCHE PATENTSCHRIFT

(11) **EP 3 850 244 B1**
(45) Veröffentlichungstag und Bekanntmachung des Hinweises auf die Patenterteilung: **24.07.2024**
(21) Anmeldenummer: 19795108.0
(22) Anmeldetag: 15.10.2019
(51) Int. Cl.: F16H 48/28

(54) **STIRNRADDIFFERENZIAL MIT SPERRFUNKTION**
SPUR GEAR DIFFERENTIAL HAVING BLOCKING FUNCTION
DIFFÉRENTIEL À PIGNONS DROITS À FONCTION DE BLOCAGE

(30) Priorität: 24.10.2018 DE 102018126551
(43) Veröffentlichungstag der Anmeldung: 21.07.2021
(73) Patentinhaber: Hirschvogel Umformtechnik GmbH, 86920 Denklingen (DE)
(72) Erfinder: HOFMANN, Tobias, 87677 Stöttwang (DE)
(74) Vertreter: Kiwit, Benedikt
(86) Internationale Anmeldenummer: PCT/EP2019/077896
(87) Internationale Veröffentlichungsnummer: WO 2020/083707

(56) Entgegenhaltungen:
- WO-A2-02/065000
- DE-A1- 102009 015 442
- DE-A1- 2 453 489
- US-A- 2 462 000

## Beschreibung

### 1. Gebiet der Erfindung

Die Erfindung betrifft ein Stirnraddifferential, insbesondere für Kraftfahrzeuge, mit einem zum Umlauf um eine Differentialachse vorgesehenen Planetenträger, einem ersten Ausgangsstirnrad, das koaxial zur Differentialachse angeordnet ist, einem zweiten Ausgangsstirnrad, das ebenfalls koaxial zur Differentialachse angeordnet ist, und zumindest einem in dem Planetenträger drehbar angeordnetem Paar miteinander kämmender Planetenräder, wobei die Planetenräder mit je einem Ausgangsstirnrad kämmen. Die Erfindung betrifft ferner ein Verfahren zur Herstellung eines solchen Stirnraddifferentials.

### 2. Hintergrund

Stirnraddifferentiale der eingangs genannten Art sind prinzipiell aus dem Stand der Technik bekannt. Diese stellen eine Alternative zu den klassischen Differentialen dar, die mit Kegelradsätzen arbeiten. Kurz gesagt soll durch einen Differential bzw. Stirnraddifferential ermöglicht werden, dass die beiden über das Differential angetriebenen Räder mit unterschiedlichen Geschwindigkeiten drehen können, um beispielsweise eine Kurvenfahrt zu ermöglichen. Aus den DE 10 2012 208 806 A1 und DE 10 2007 040 475 A1 sind beispielhafte Stirnraddifferentiale bekannt. Die US 2,462,000 A offenbart ein nicht-ausgleichendes Drehmomenten-Differentialgetriebe. Die WO 02/065000 A2 offenbart ein Getriebesystem mit einstellbarem Widerstand für eine Differentialwirkung. Die DE 10 2009 015 442 A1 offenbart ein Differenzial mit Reibanordnung. Die DE 24 53 489 offenbart EIN Differential mit begrenztem Schlupf und vernachlässigbarer Vorspannung bei den Bedingungen unter leichter Last.

Aus dem Stand der Technik sind ferner Sperrdifferentiale bekannt, die dafür vorgesehen sind, dem durch das Differential bewirkten Effekt durch Sperrwirkung entgegenzuwirken. Dies ist in bestimmten Situationen von Vorteil, beispielsweise für den Fall, dass an einem der Räder Schlupf auftritt. In diesem Fall würde bei einem Differential ohne Sperrwirkung (offenes Differential) nämlich das eine Rad durchdrehen, wohingegen das andere Rad sich wenig bis gar nicht dreht. Die Sperrwirkung bewirkt dabei, dass mehr Moment auf das Rad ohne Schlupf übertragen wird, also die Relativgeschwindigkeit zwischen den Ausgangsstirnrädern reduziert wird. Bei bestimmten Anwendungen kann die Sperrwirkung sogar eine starre Kopplung zwischen den Ausgangsstirnrädern bewirken, beispielsweise wenn ein Nutzfahrzeug temporär durch schwieriges Gelände oder Acker fahren muss. Nachteilig an den aus dem Stand der Technik bekannten Stirnraddifferentialen ist, dass diese verhältnismäßig aufwendig herzustellen sind. Dies betrifft insbesondere die Verzahnung der Ausgangsstirnräder und Planetenräder. So müssen die vorgenannten Zahnräder für den funktionsgemäßen Gebrauch einige Nachbearbeitungsschritte (Entgraten etc.) durchlaufen, um insbesondere die geforderten engen Toleranzen einhalten zu können. Zudem nehmen die aus dem Stand der Technik bekannten Stirnraddifferentiale verhältnismäßig viel Bauraum in Anspruch; dies gilt insbesondere dann, wenn eine zusätzliche Vorrichtung zum Bewirken einer Sperrwirkung des Stirnraddifferentials verwendet werden soll.

Ausgehend von diesem Stand der Technik stellt sich die vorliegende Erfindung die Aufgabe, die oben genannten Nachteile aus dem Stand der Technik zu überwinden, also insbesondere ein Stirnraddifferential bereitzustellen, welches einfacher herzustellen ist.

Diese und andere Aufgaben, die beim Lesen der folgenden Beschreibung noch genannt werden oder vom Fachmann erkannt werden können, werden mit dem Gegenstand und dem Verfahren der unabhängigen Ansprüche gelöst. Vorteilhafte Weiterbildungen sind Gegenstand der hierauf rückbezogenen Unteransprüche.

### 3. Ausführliche Beschreibung der Erfindung

Ein erfindungsgemäßes Stirnraddifferential weist auf: einen zum Umlauf um eine Differentialachse vorgesehenen Planetenträger, ein erstes Ausgangsstirnrad, das koaxial zur Differentialachse angeordnet ist, ein zweites Ausgangsstirnrad, das ebenfalls koaxial zu Differentialachse angeordnet ist, und zumindest ein in dem Planetenträger drehbar angeordnetes Paar miteinander kämmender Planetenräder, wobei die Planetenräder mit je einem Ausgangsstirnrad kämmen. Wenigstens eines (oder alle) der Ausgangsstirnräder und das damit kämmende Planetenrad und/oder die beiden miteinander kämmenden Planetenräder sind derart konisch verzahnt, dass, wenn sich die Planetenräder relativ zueinander drehen, das wenigstens eine der Ausgangsstirnräder und/oder der Planetenräder durch Beaufschlagung eines Drehmoments in eine Stellung axial bewegt wird, in der eine Sperrwirkung bewirkt wird.

Die konische Verzahnung bewirkt dabei, dass durch die schräge bzw. kegelförmige Form der Verzahnung eine Drehbewegung in eine weitere

Bewegung umgewandelt werden kann; drehen sich also zwei kämmende Zahnräder relativ zueinander, so bewegen sich die Zahnräder aufgrund der konischen Verzahnung eines oder beider der Zahnräder in eine weitere Richtung relativ zueinander, beispielsweise voneinander weg oder aufeinander zu (sie drücken sich durch die Beaufschlagung eines Drehmoments beispielsweise voneinander weg). Diese zusätzliche Bewegung des wenigstens einen der Ausgangsstirnräder und/oder der Planetenräder wird nun in vorteilhafter Weise genutzt, um eine Sperrwirkung zu bezwecken. Zusätzliche sperrwirkungserhöhende Einrichtungen können somit bestenfalls entfallen bzw. brauchen nur eine geringere zusätzliche Sperrwirkung entstehen lassen. Ferner eignet sich die konische Verzahnung für eine effizientere Herstellung, da die für die Herstellung der konischen Verzahnung geeigneten Herstellungsverfahren weniger Nachbearbeitungsschritte benötigen; bestenfalls kann die jeweilige Verzahnung in einem einzigen Herstellungsschritt hergestellt werden.

Vorzugsweise sind die Planetenräder des zumindest einen Paars Planetenräder derart konisch verzahnt, dass, wenn sie die Planetenräder relativ zueinander drehen, die Planetenräder sich Richtung des Planetenträgers bewegen, um in eine Stellung zu gelangen, in der die Planetenräder gegen den Planetenträger drücken, und somit eine Sperrwirkung bewirken. Durch Drücken der Planetenräder gegen den Planetenträger kann somit eine Reibkraft bewirkt werden, die die Drehgeschwindigkeit bzw. Drehbewegung der Planetenräder relativ zueinander abbremst und somit eine Sperrwirkung bewirkt, da durch die reduzierte relative Drehgeschwindigkeit der Planetenräder zueinander auch die relative Geschwindigkeit der Ausgangsstirnräder zueinander reduziert wird. Eine Sperrwirkung kann somit besonders effektiv erzielt werden.

Die Planetenräder des zumindest einen Paars Planetenräder können derart konisch verzahnt sein, dass, wenn sich die Planetenräder relativ zueinander drehen, die Planetenräder sich in entgegengesetzte Richtungen bewegen, um in die Stellung zu gelangen, in der die Planetenräder gegen den Planetenträger drücken und somit eine Sperrwirkung bewirken. Somit kann auf einfache Art eine Sperrwirkung bei einer gleichzeitig kompakten Bauweise des Sperrdifferentials erzielt werden.

Vorzugsweise sind die Ausgangsstirnräder derart konisch verzahnt, dass, wenn sich die Planetenräder relativ zueinander drehen, die Ausgangsstirnräder sich relativ aufeinander zu bewegen, um in eine Stellung zu gelangen, in der die Ausgangsstirnräder gegeneinandergedrückt werden und somit eine Sperrwirkung bewirken. Durch Gegeneinanderdrücken der Ausgangsstirnräder wird somit zwischen den Ausgangsstirnrädern eine Reibkraft bewirkt, die bewirkt, dass ein Moment von dem schnelleren Ausgangsstirnrad auf das langsamere Ausgangsstirnrad übertragen wird. Folglich reduziert sich die relative Drehgeschwindigkeit der Ausgangsstirnräder zueinander, wodurch effektiv eine Sperrwirkung erzielt wird.

Alternativ kann auch vorgesehen sein, dass die Ausgangsstirnräder derart konisch verzahnt sind, dass, wenn auf die Planetenräder relativ zueinander drehen, die Ausgangsstirnräder sich in Richtung des Planetenträgers bewegen, um in eine Stellung zu gelangen, in der die Ausgangsstirnräder gegen den Planetenträger drücken und somit eine Sperrwirkung bewirken. Mit anderen Worten wird durch Drücken des jeweiligen Ausgangsstirnrads gegen den Planetenträger die Drehzahl der Ausgangsstirnräder in Richtung der Drehzahl des Planetenträgers angepasst. Somit wird die Drehgeschwindigkeit der Ausgangsstirnräder relativ zueinander reduziert und effektiv eine Sperrwirkung erzielt.

Der Planetenträger kann für jedes der Planetenräder einen jeweiligen definierten Reibbereich aufweisen, gegen den das jeweilige Planetenrad (zur Bewirkung der Sperrwirkung) drücken kann. Somit kann insbesondere der Verschleiß, welcher durch die zwischen jeweiligem Planetenrad und Planetenträger wirkende Druck- bzw. Normalkraft verursacht wird, reduziert werden.

Der jeweilige Reibbereich kann eine Struktur, insbesondere eine Reibscheibe, zur Erhöhung der Reibung zwischen dem Reibbereich und dem gegen den Reibbereich drückenden Planetenrad aufweisen. Somit kann durch die erhöhte Reibung und somit erhöhte Reibungskraft (Haft- bzw. Gleitreibungskraft) die Sperrwirkung effektiv erhöht werden. Bevorzugt steht die Struktur von dem Planetenträger (axial) hervor. Somit kann der Laufweg reduziert werden, den das jeweilige Planetenrad zurücklegen muss, um gegen den Planetenträger bzw. die Struktur zur Bewirkung der Sperrwirkung zu drücken; eine Sperrwirkung kann somit noch schneller bewirkt werden.

Der jeweilige Reibbereich kann eine Ausnehmung in dem Planetenträger aufweisen, in der vorzugsweise die Struktur aufgenommen ist. Somit kann das Stirnraddifferential kompakt gestaltet werden.

Das jeweilige Planetenrad kann einen (radialen und/oder axialen) Vorsprung zum Drücken gegen den Planetenträger, vorzugsweise gegen den jeweiligen Reibbereich bzw. die jeweilige Struktur, aufweisen. Auf diese Weise kann der Laufweg reduziert werden, den das jeweilige Planetenrad zurücklegen muss, um gegen den Planetenträger bzw. den jeweiligen Reibbereich/Struktur zur Bewirkung der Sperrwirkung zu drücken; eine Sperrwirkung kann somit noch schneller bewirkt werden.

Das erste und/oder das zweite Ausgangsstirnrad kann/können jeweils einen (weiteren) Reibbereich aufweisen, gegen den das jeweils andere Ausgangsstirnrad (zur Bewirkung der Sperrwirkung) drücken kann. Somit kann insbesondere der Verschleiß, welcher durch die zwischen den Ausgangsstirnrädern wirkende Druck- bzw. Normalkraft verursacht wird, reduziert werden.

Der jeweilige (weitere) Reibbereich kann eine Struktur, insbesondere eine Reibscheibe, zur Erhöhung der Reibung zwischen dem Reibbereich und dem jeweils gegen den Reibbereich drückenden Ausgangsstirnrad aufweisen. Somit kann durch die erhöhte Reibung und somit erhöhte Reibungskraft die Sperrwirkung erhöht werden.

Für eine besonders kompakte Bauweise kann der jeweilige (weitere) Reibbereich eine Ausnehmung in dem jeweiligen Ausgangsstirnrad aufweisen, in der vorzugsweise die Struktur aufgenommen ist.

Bevorzugt ist, wenn der Kopfkreisdurchmesser der jeweiligen konischen Verzahnung von einer ersten Stirnseite zu einer zweiten Stirnseite der jeweiligen konischen Verzahnung (stetig) abnimmt, und der Fußkreisdurchmesser der jeweiligen konischen Verzahnung von der ersten Stirnseite zu der zweiten Stirnseite der jeweiligen konischen Verzahnung gleichbleibt oder (stetig) zu- oder abnimmt. Mit anderen Worten ist es bevorzugt, wenn sich eine die Zahnköpfe einhüllende Fläche von der ersten Stirnseite zu der zweiten Stirnseite konisch verjüngend bzw. abfallend erstreckt, wobei sich eine die Zahnfüße einhüllende Fläche von der ersten Stirnseite zu der zweiten Stirnseite zylindrisch, also zur jeweiligen Drehachse parallel, oder konisch verjüngend bzw. abfallend oder konisch aufweitend erstreckt.

Vorteilhafterweise hat die jeweilige konische Verzahnung einen Teilkegelwinkel, der in einem Bereich von 3 Grad bis 45 Grad liegt. In anderen Beispielen kann der Teilkegelwinkel auch in einem Bereich von 5 Grad bis 35 Grad, von 10 Grad bis 30 Grad oder von 20 Grad bis 25 Grad liegen.

Vorzugsweise ist die jeweilige konische Verzahnung wenigstens durch eine Entformungsschräge zur Herstellung des jeweiligen wenigstens einen der Ausgangsstirnräder und/oder der Planetenräder gebildet. Mit anderen Worten: die zur einfachen Entformung des jeweiligen Zahnrads vorgesehene Entformungsschräge kann gleichzeitig vorgesehen sein, um die schräge Form der konischen bzw. kegelförmigen Verzahnung zu bilden.

Zur besonders vorteilhaften Herstellung können die Planetenräder und/oder die Ausgangsstirnräder in einem Umformverfahren, insbesondere in einem Druckumformverfahren, hergestellt sein. In einem besonders bevorzugten Ausführungsbeispiel ist das Umformverfahren Schmieden, insbesondere Gesenkschmieden. Diese Herstellungsverfahren eignen sich insbesondere, wenn die Ausgangsstirnräder als Gleichteile und/oder die Planetenräder als Gleichteile ausgebildet sind.

Das Stirnraddifferential kann zumindest zwei, drei, vier, fünf oder sechs in dem Planetenträger drehbar angeordneten Paare miteinander kämmender Planetenräder aufweisen. Zum Beispiel können sich somit die durch die Planetenräder bewirkten Sperrwirkungen kumulieren, um eine noch höhere Sperrwirkung zu erzielen.

Gemäß einem weiteren Aspekt betrifft die Erfindung ein Verfahren zur Herstellung eines Stirnraddifferentials wie oben beschrieben. Das Verfahren weist die folgenden Schritte auf: Bereitstellen eines zum Umlauf um eine Differentialachse vorgesehenen Planetenträgers, Bereitstellen eines ersten Ausgangsstirnrads koaxial zur Differentialachse, Bereitstellen eines zweiten Ausgangsstirnrads koaxial zur Differentialachse, und Bereitstellen zumindest eines drehbar angeordneten Paars miteinander kämmender Planetenräder in dem Planetenträger, sodass die Planetenräder mit je einem Ausgangsstirnrad kämmen. Wenigstens eines (oder alle) der Ausgangsstirnräder und das damit kämmende Planetenrad und/oder die beiden miteinander kämmenden Planetenräder sind derart konisch verzahnt, dass, wenn sich die Planetenräder relativ zueinander drehen, das wenigstens eine der Ausgangsstirnräder und/oder der Planetenräder durch Beaufschlagung eines Drehmoments in eine Stellung axial bewegt wird, in der eine Sperrwirkung bewirkt wird. Die oben genannten mit Bezug zum Stirnraddifferential beschriebenen Ausführungen und Vorteile gelten für das Verfahren analog.

### 4. Beschreibung einer bevorzugten Ausführungsform:

Nachfolgend wird die Erfindung anhand der Figuren, in denen ein vorteilhaftes Ausführungsbeispiel der Erfindung dargestellt ist, beispielhaft beschrieben. In den Figuren zeigen:
- **Figur 1**: eine schematische perspektivische Ansicht eines Ausführungsbeispiels des erfindungsgemäßen Stirnraddifferentials,
- **Figur 2**: eine Seitenansicht des in Figur 1 gezeigten Stirnraddifferentials,
- **Figur 3**: die in Figur 2 gezeigte Seitenansicht, wobei insbesondere zur Veranschaulichung der beispielhaft gezeigten Ausgangsstirnräder und Planetenräder ein Teil des Planetenträgers weggelassen wurde,
- **Figur 4**: eine Draufsicht des in den Figuren 1 bis 3 gezeigten Stirnraddifferentials, wobei der Planetenträger zur Veranschaulichung der beispielhaft gezeigten Ausgangsstirnräder und Planetenräder weggelassen wurde,
- **Figur 5**: eine schematische perspektivische Ansicht eines Teils des in den Figuren 1 bis 4 beispielhaft gezeigten Planetenträgers,
- **Figur 6**: eine schematische perspektivische Ansicht eines der in den Figuren 1 bis 4 beispielhaft gezeigten Ausgangsstirnräder,
- **Figur 7**: eine schematische perspektivische Ansicht eines der in den Figuren 1 bis 4 gezeigten Planetenräder, und
- **Figur 8**: eine Seitenansicht des in Figur 7 gezeigten Planetenrads mit dargestelltem Kopf-, Teil-, und Fußkegelwinkel.

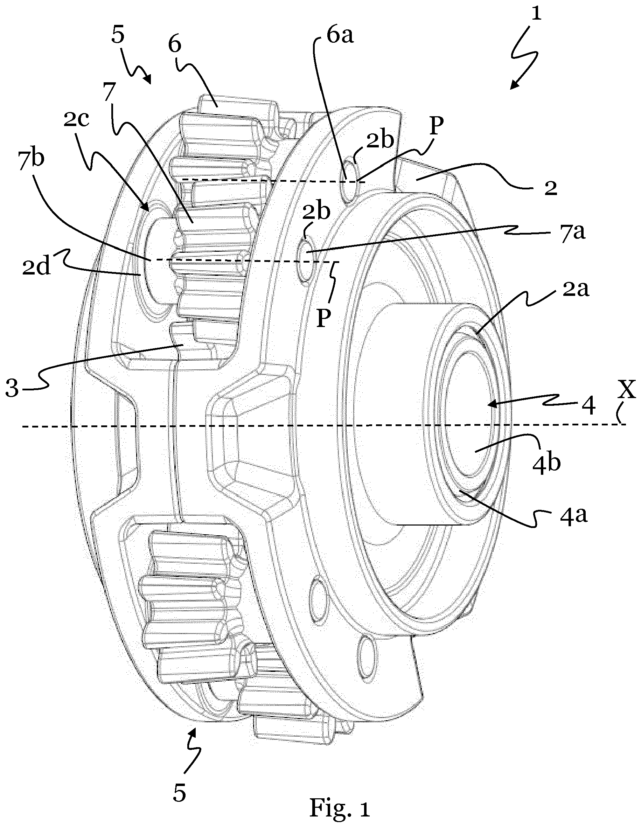

Figur 1 zeigt beispielhaft ein erfindungsgemäßes Stirnraddifferential 1, das in bekannter Weise für den Ausgleich unterschiedlicher Drehgeschwindigkeiten der Abtriebswellen eines Kraftfahrzeugs bei der Kurvenfahrt sorgt. Das Stirnraddifferential 1 weist einen zum Umlauf um eine Differentialachse X vorgesehenen Planetenträger (bzw. Differentialgehäuse) 2 auf, welcher beispielsweise über ein Schaltgetriebe und eine Gelenkwelle von einer Kraftmaschine, beispielsweise einer Brennkraftmaschine oder einer Elektromaschine, angetrieben wird. Hierfür kann beispielsweise vorgesehen sein, dass mit dem Planetenträger 2 ein Antriebselement ausgebildet ist, um die Leistung der Kraftmaschine auf den Planetenträger 2 zu übertragen (auch bekannt als "final drive" bzw. Achsantrieb oder Achsgetriebe). Das Antriebselement kann lösbar oder unlösbar mit dem Planetenträger 2 ausgebildet sein, beispielsweise über einen integrale bzw. stoffschlüssige Ausbildung. Beispielsweise ist der Planetenträger 2 radial verlängert, und das Antriebselement ist in dieser radialen Verlängerung ausgebildet. Das Antriebselement ist beispielsweise ein Stirnrad.

Das Stirnraddifferential 1 weist ferner ein erstes Ausgangsstirnrad (erstes Sonnenrad) 3, das koaxial zur Differentialachse X angeordnet ist, und ein zweites Ausgangsstirnrad (zweites Sonnenrad) 4, das ebenfalls koaxial zur Differentialachse X angeordnet ist, auf. Jedes der Ausgangsstirnräder 3, 4 weist einen jeweiligen Lagerbereich 3a, 4a zur drehbaren Lagerung des jeweiligen Ausgangsstirnrads 3, 4 in einem entsprechenden Lagerbereich 2a des Planetenträgers 2 auf, sodass die Ausgangsstirnräder 3, 4 um die Differentialachse X bezüglich des Planetenträgers 2 drehbar sind. Jeder der Lagerbereiche 3a, 4a ist vorzugsweise als Vorsprung ausgebildet. Jedes der Ausgangsstirnräder 3, 4 weist zudem einen jeweiligen (weiteren) Lagerbereich 3b, 4b auf, über welchen das jeweilige Ausgangsstirnrad 3, 4 drehfest mit einer jeweiligen, nicht näher dargestellten Abtriebswelle verbunden ist, sodass die jeweilige Abtriebswelle ebenfalls koaxial zur Differentialachse X angeordnet ist. Der jeweilige Lagerbereich 3b, 4b kann als Bohrung, insbesondere als Durchgangsbohrung, in dem jeweiligen Ausgangsstirnrad 3, 4 ausgebildet sein.

Das Stirnraddifferential 1 weist außerdem zumindest ein in dem Planetenträger 2 drehbar angeordnetes Paar 5 miteinander kämmender Planetenräder 6, 7 auf, wobei die Planetenräder 6, 7 mit je einem Ausgangsstirnrad 3, 4 kämmen. In dem in den Figuren 1 bis 4 gezeigten Ausführungsbeispiel des Stirnraddifferentials 1 kämmt das (erste) Planetenrad 6 mit dem ersten Ausgangsstirnrad 3, wobei das (zweite) Planetenrad 7 mit dem zweiten Ausgangsstirnrad 4 kämmt. Wie die Figuren 1 bis 4 erkennen lassen, können in dem Planetenträger 2 drei Paare 5 miteinander kämmender Planetenräder 6, 7 drehbar angeordnet sein. In anderen Ausführungsbeispielen können auch (nur) zwei, vier, fünf oder sechs Paare 5 miteinander kämmender Planetenräder 6, 7 angeordnet sein. Die mehreren Paare 5 miteinander kämmender Planetenräder 6, 7 sind vorzugsweise um die Differentialachse X gleichmäßig verteilt angeordnet.

Jedes der Planetenräder 6, 7 ist um eine jeweilige Drehachse P in dem Planetenträger 2 drehbar angeordnet bzw. gelagert. Die jeweilige Drehachse P ist im Wesentlichen parallel zu der Differentialachse X. Jedes der Planetenräder 6, 7 kann ein jeweiligen Lagerbereich 6a, 7a zur Lagerung des jeweiligen Planetenrads 6, 7 in einem entsprechenden, im Planetenträger 2 ausgebildeten Lagerbereich 2b aufweisen. Der jeweilige Lagerbereich 6a, 7a kann wenigstens einen Vorsprung aufweisen, welcher in einer entsprechenden Ausnehmung des Lagerbereich 2b drehbar angeordnet bzw. gelagert ist, um um die jeweilige Drehachse P drehbar gelagert zu sein. Der jeweilige Lagerbereich 6a, 7a kann auch zwei auf sich gegenüberliegenden Seiten des jeweiligen Planetenrads 6, 7 vorgesehene Vorsprünge aufweisen, die jeweils in einer entsprechenden Ausnehmung des Lagerbereichs 2b drehbar angeordnet sind.

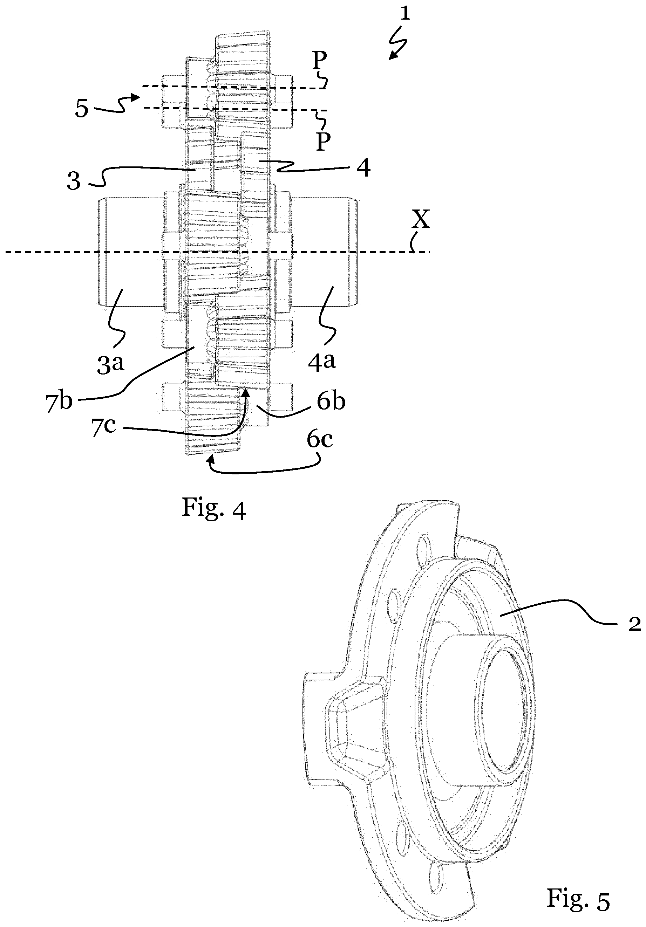

Wie die Figur 1 erkennen lässt, kann der Planetenträger 2 mehrteilig, insbesondere zweiteilig ausgebildet sein, um beispielsweise eine einfache Montage der Ausgangsstirnräder 3, 4 und Planetenräder 6, 7 zu ermöglichen. Insbesondere können die zwei Teile des Planetenträgers 2 im Wesentlichen identisch ausgebildet sein. In Figur 5 ist beispielhaft ein Teil eines mehrteiligen, insbesondere zweiteiligen Planetenträgers 2 dargestellt.

Erfindungsgemäß ist nun vorgesehen, dass wenigstens eines der Ausgangsstirnräder 3, 4 und/oder der Planetenräder 6, 7 derart konisch verzahnt ist, dass, wenn sich die Planetenräder 6, 7 relativ zueinander drehen - also wenn unterschiedliche Drehgeschwindigkeiten an den Abtriebswellen durch das Stirnraddifferential 1 bewirkt werden - das wenigstens eine der Ausgangsstirnräder 3, 4 und/oder der Planetenräder 6, 7 in eine Stellung bewegt wird/werden, in der eine Sperrwirkung bewirkt wird. In dem in den Figuren gezeigten Ausführungsbeispiel sind sowohl die Ausgangsstirnräder 3, 4 als auch die Planetenräder 6, 7 konisch verzahnt, weisen also eine konische Verzahnung 3c, 4c, 6c, 7c auf. Dies lassen insbesondere die Figuren 4, 6 und 7 gut erkennen.

Gemäß dem in den Figuren gezeigten Ausführungsbeispiel wird eine Sperrwirkung wie folgt bewirkt. Drehen sich die Planetenräder 6, 7 relativ zueinander, bewirkt die konische Verzahnung 6c, 7c, dass sich die Planetenräder 6, 7 in Richtung des Planetenträgers 2, insbesondere in entgegengesetzte Richtungen, bewegen. Die Planetenräder 6, 7 werden also jeweils somit entlang ihrer jeweiligen Drehachse P axial bewegt; das heißt, der jeweilige Lagerbereich 6a, 7a bewirkt zudem, dass das jeweilige Planetenrad 6, 7 in dem Planetenträger 2 (mit einem gewissen Spiel) axial verschiebbar angeordnet bzw. gelagert ist. Mit Blick auf die Figuren 1 und 4 wird also das Planetenrad 6 nach rechts und das Planetenrad 7 nach links bewegt. Durch diese Bewegung werden die Planetenräder 6, 7 jeweils schließlich in eine Stellung gelangen, in der die Planetenräder 6, 7 gegen den Planetenträger 2 drücken und somit eine Sperrwirkung bewirken. Das heißt, durch Drücken der Planetenräder 6, 7 gegen den Planetenträger 2 wird eine (Reibungs-)Kraft bewirkt, die die Drehgeschwindigkeit der Planetenräder 6, 7 relativ zueinander abbremst, wodurch gleichzeitig die Drehgeschwindigkeit der Ausgangsstirnräder 3, 4 relativ zueinander und somit die Drehgeschwindigkeit der der mit diesen drehfest verbundenen Abtriebswellen relativ zu einander reduziert wird.

Um den vorgenannten Effekt noch weiter zu verstärken, kann der Planetenträger 2 - wie insbesondere die Figur 1 erkennen lässt - für jedes der Planetenräder 6, 7 einen jeweiligen definierten Reibbereich 2c aufweisen, gegen den das jeweilige Planetenrad 6, 7 drücken kann. Der Reibbereich 2c ist vorzugsweise so ausgestaltet, dass der Verschleiß, der an der Kontaktfläche zwischen Planetenträger 2 und jeweiligem Planetenrad 6, 7 auftritt, reduziert wird. Hierfür können beispielsweise Mittel zur Anwendung kommen wie sie von Reibkupplungen bekannt sind.

Wie in der Figur 1 beispielhaft dargestellt, kann der jeweilige Reibbereich 2c eine Reibscheibe 2d zur Erhöhung der Reibung zwischen dem zwischen dem Reibbereich 2c und dem gegen den Reibbereich 2c drückenden Planetenrad 6, 7 aufweisen. Die Reibscheibe 2d ist vorzugsweise so in den Reibbereich 2c vorgesehen, dass diese von dem Planetenträger 2 (axial, also in Richtung der Differentialachse X) hervorsteht, insbesondere um einen definierten Betrag hervorsteht, beispielsweise um 0,5 mm. Anstatt der Reibscheibe 2d kann der Reibbereich 2c jedoch auch jede andere Struktur zur Erhöhung der Reibung zwischen Reibbereich 2c und dem gegen den Reibbereich 2c drückenden Planetenrad 6, 7 aufweisen, die vorzugsweise wie zuvor beschrieben von dem Planetenträger 2 hervorsteht. Der Reibbereich 2c weist vorzugsweise eine in dem Planetenträger 2 ausgebildete Ausnehmung auf, in der beispielsweise die Struktur bzw. die Reibscheibe 2d aufgenommen ist. Die Ausnehmung hat vorzugsweise eine derartige Tiefe, dass die in der Ausnehmung aufgenommene Struktur wie zuvor beschriebenen etwas von dem Planetenträger 2 hervorstehen kann. Vorzugsweise beträgt die Tiefe 1 mm, sodass eine vorzugsweise 1,5 mm dicke Struktur bzw. Reibscheibe 0,5 mm von dem Planetenträger 2 hervorsteht.

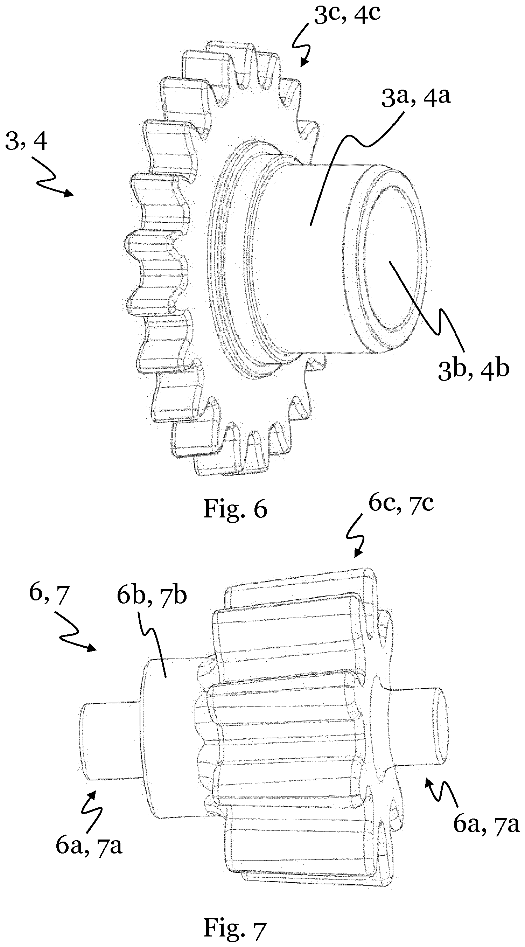

Wie insbesondere die Figuren 1, 4 und 7 erkennen lassen, kann das jeweilige Planetenrad 6, 7 einen (radialen und/oder axialen) Vorsprung 6b, 7b zum Drücken gegen den Planetenträger 2 bzw. den jeweiligen Reibbereich 2c aufweisen. Wie insbesondere die Figur 7 erkennen lässt, ist der Vorsprung 6b, 7b vorzugsweise mit dem jeweiligen Lagerbereich 6a, 7a, insbesondere mit einem Vorsprung des jeweiligen Lagerbereichs 6a, 7a, integral und/oder koaxial zur Drehachse P ausgebildet. Eine Fläche des jeweiligen Vorsprung 6b, 7b, die gegen den Planetenträger 2 bzw. den jeweiligen Reibbereich 2c drückt, kann eine Struktur zur Erhöhung der Reibung zwischen dem Planetenträger 2 bzw. Reibbereich 2c und dem gegen den Planetenträger 2 bzw. Reibbereich 2c drückenden Planetenrad 6b, 7b aufweisen.

Da die Ausgangsstirnräder 3, 4 des in den Figuren beispielhaft dargestellten Stirnraddifferentials 1 ebenfalls konisch verzahnt sind, werden diese sich wegen ihrer konische Verzahnung 3c, 4c und der sich relativ zueinander drehenden Planetenräder 6, 7 (ebenfalls) in eine Stellung bewegen, in der eine Sperrwirkung bewirkt wird. Die Ausgangsstirnräder 3, 4 sind also vorzugsweise relativ zu dem Planetenträger 2 axial (entlang der Differentialachse X) verschiebbar gelagert. Genauer gesagt werden die in den Figuren 1 bis 4 dargestellten Ausgangsstirnräder 3, 4 sich relativ aufeinander zu bewegen, um schließlich in eine Stellung zu gelangen, in der die Ausgangsstirnräder 3, 4 gegeneinanderdrücken und somit eine Sperrwirkung bewirken. Durch dieses Gegeneinanderdrücken wird somit eine Kraft bewirkt, welche durch die somit zwischen den Ausgangsstirnräder 3, 4 erhöhte Reibungskraft die relative Drehgeschwindigkeit der Ausgangsstirnräder 3, 4 zueinander und folglich die relative Drehgeschwindigkeit der mit diesen drehfest verbundenen Abtriebswellen zueinander reduziert; ein Drehmoment wird somit von dem schnelleren Ausgangsstirnrad auf das langsamere Ausgangsstirnrad (direkt) übertragen.

Um den vorgenannten Effekt der Sperrwirkung durch die Ausgangsstirnräder 3, 4 zu erhöhen, kann das erste und/oder das zweite Ausgangsstirnrad 3, 4 jeweils einen (weiteren) Reibbereich aufweisen, gegen den das jeweils andere Ausgangsstirnrad 3, 4 drücken kann. Der Reibbereich ist vorzugsweise auf einer Fläche des jeweiligen Ausgangsstirnrads 3, 4 vorgesehen, welche dem jeweils anderen Ausgangsstirnrad 3, 4 gegenüberliegt. Der (weitere) Reibbereich kann insbesondere entsprechend dem oben beschriebenen Reibbereich 2c ausgebildet sein. Der (weitere) Reibbereich kann also beispielsweise eine Struktur, insbesondere eine Reibscheibe, zur Erhöhung der Reibung zwischen dem Reibbereich und dem jeweils gegen den Reibbereich drückenden Ausgangsstirnrad 3, 4 aufweisen. Beispielsweise weist ein solcher Reibbereich eine Ausnehmung auf, die in dem jeweiligen Ausgangsstirnrad 3, 4 ausgebildet ist, und in der vorzugsweise die Struktur, also beispielsweise eine Reibscheibe, aufgenommen ist.

Alternativ zu der wie oben beschriebenen konischen Verzahnung der Ausgangsstirnräder 3, 4, bei der sich die Ausgangsstirnräder 3, 4 aufgrund der sich relativ zueinander drehenden Planetenräder 6, 7 relativ aufeinander zu bewegen, können die Ausgangsstirnräder 3, 4 auch so konisch verzahnt sein, dass diese sich aufgrund der relativen Drehung der Planetenräder 6, 7 zueinander in Richtung des Planetenträgers 2 bewegen, um in eine Stellung zu gelangen, in der die Ausgangsstirnräder 3, 4 gegen den Planetenträger 2 drücken und somit eine Sperrwirkung bewirken. Mit anderen Worten: die Bewegungsrichtung der in dem bevorzugten Ausführungsbeispiel zur Anwendung kommenden und sich aufeinander zu bewegenden Ausgangsstirnräder 3, 4 kann durch entsprechende Ausgestaltung der konische Verzahnung 3c, 4c und somit veränderten Eingriff zwischen den Ausgangsstirnrädern 3, 4 und jeweiligem Planetenrad 6, 7 umgedreht werden. Entsprechendes gilt für die Planetenräder 6, 7.

Die Erfindung ist nicht auf die zuvor beschriebene, bevorzugte Bewirkung einer Sperrwirkung sowohl durch die Ausgangsstirnräder 3, 4 als auch durch die Planetenräder 6, 7 beschränkt. Eine Sperrwirkung kann beispielsweise auch nur durch die die oben beschriebene Ausgestaltung der Ausgangsstirnräder 3, 4 bewirkt werden. Alternativ kann eine Sperrwirkung auch nur durch die oben beschriebene Ausgestaltung der Planetenräder 6, 7 bewirkt werden. Es ist auch nicht zwingend, dass beide Ausgangsstirnräder 3, 4 bzw. beide Planetenräder 6, 7 konisch verzahnt sind. Beispielsweise kann auch vorgesehen sein, dass nur eines der Ausgangsstirnräder 3, 4 bzw. nur eines der Planetenräder 6, 7 konisch verzahnt ist, um eine erfindungsgemäße Sperrwirkung durch Bewegen der Ausgangsstirnräder 3, 4 bzw. der Planetenräder 6, 7 zu bewirken.

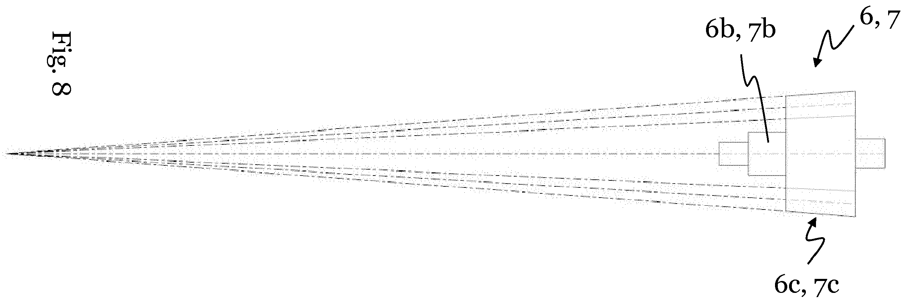

Das jeweilige Zahnrad, welches konisch verzahnt ist, also beispielsweise eines oder beide der Ausgangsstirnräder 3, 4 und/oder eines oder beide der Planetenräder 6, 7 (vergleiche insbesondere Figuren 6 und 7), kommt in dem Stirnraddifferential 1 wie ein entsprechendes Stirnrad zum Einsatz, mit dem Unterschied, dass es eine Zahnradgeometrie eines Kegelrads aufweist. Figur 8 lässt beispielhaft mit Bezug zu einem Planetenrad 6, 7 gut erkennen, dass der Kopfkreisdurchmesser der jeweiligen konischen Verzahnung 6c, 7c von einer ersten Stirnseite der jeweiligen konischen Verzahnung 6c, 7c zu einer zweiten Stirnseite der konischen Verzahnung 6c, 7c, welche beispielsweise auf Seiten des Vorsprungs 6b, 7b vorgesehen ist, (stetig) abnimmt, und wobei der Fußkreisdurchmesser der jeweiligen konischen Verzahnung 6c, 7c von der ersten Stirnseite zu der zweiten Stirnseite der jeweiligen konischen Verzahnung ebenfalls abnimmt. Alternativ hierzu kann jedoch auch vorgesehen sein, dass der Fußkreisdurchmesser der jeweiligen konischen Verzahnung 6c, 7c von der ersten Stirnseite zu der zweiten Stirnseite der jeweiligen konischen Verzahnung 6c, 7c gleichbleibt oder zunimmt. Mit anderen Worten: das jeweilige Zahnrad hat - wie bei einem Stirnrad - eine im Wesentlichen zylindrische Wälzfläche, wobei das Profil der Verzahnung sich von einer Stirnseite der Verzahnung zur anderen Stirnseite der Verzahnung (stetig und monoton) gemäß einem Kegel bzw. Konus verändert. Das jeweilige Zahnrad mit der konischen Verzahnung weist also auch einen Teilkegelwinkel auf. Wie in Figur 4 beispielsweise erkennbar, verjüngt sich die Kegelform der konischen Verzahnung - also die Ausbildung zur Bildung der konischen Verzahnung bzw. Kegelform des jeweiligen Zahnrads - vorzugsweise in eine Richtung, welche der Bewegungsrichtung des jeweiligen Zahnrads zum Gelangen in die Stellung zum Bewirken der Sperrwirkung entspricht.

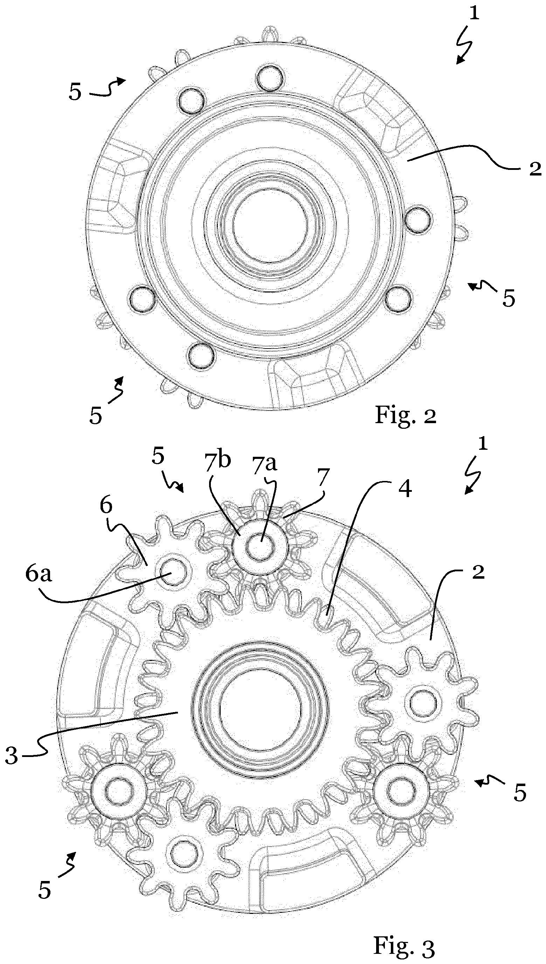

Wie Figur 8 gut erkennen lässt, ist es bevorzugt, wenn sich die Strahlen der Kopf-, Teil- und Fußkegelwinkel der jeweiligen konischen Verzahnung in einem Schnittpunkt, beispielsweise auf der Drehachse P, schneiden. Vorzugsweise sind Kopf-, Teil- und Fußkegelwinkel alle (leicht) unterschiedlich, jedoch immer in dieselbe Richtung laufend. Der Teilkegelwinkel kann beispielsweise in einem Bereich von 3° bis 45° liegen. In anderen Beispielen liegt der Teilkegelwinkel in einem Bereich von 5° bis 35°, von 10° bis 30°, oder von 20° bis 25°. Der Kopfkegelwinkel beträgt besonders bevorzugt 3° oder 5°. Der Fußkegelwinkel beträgt besonders bevorzugt 5° oder 3°. Bevorzugt ist die konische Verzahnung (in Draufsicht des jeweiligen Zahns gesehen) gerade oder schräg verzahnt, also insbesondere zur jeweiligen Drehachse P (in Draufsicht des jeweiligen Zahns gesehen) parallel oder schräg ausgebildet. Die Verzahnungsart der Verzahnung ist beispielsweise eine Evolventenverzahnung (vgl. beispielsweise Figur 3).

Ein besonderer Vorteil der konischen Verzahnung des jeweiligen Zahnrads liegt insbesondere darin, dass ein solches Zahnrad einfacher herzustellen ist. So kann das herzustellende Zahnrad durch die im Herstellungsprozess hergestellte bzw. geformte konische, also insbesondere durch die Kegelform bereitgestellte schräge Verzahnung, einfacher aus einer entsprechenden Form zur Herstellung des jeweiligen Zahnrads entnommen werden; dies ist insbesondere dann von Vorteil, wenn das jeweilige Zahnrad nicht schrägverzahnt ist. Die jeweilige konische Verzahnung kann also wenigstens durch eine Entformungsschräge zur Herstellung des jeweiligen Zahnrads gebildet sein. Die Entformungsschräge ist also insbesondere aus dem Grund von Vorteil, weil das Bauteil - also hier das Zahnrad - in der jeweiligen Form zur Herstellung des Bauteils sonst steckenbleiben würde. Zur Herstellung der Planetenräder 6, 7 und/oder der Ausgangsstirnräder 3, 4 - insbesondere für jene Zahnräder, die konisch verzahnt sind - eignet sich insbesondere ein Umformverfahren wie beispielsweise ein Druckumformverfahren. Besonders bevorzugt ist es, wenn das Umformverfahren Schmieden, insbesondere Gesenkschmieden, ist. Als bevorzugtes Material zur Herstellung des jeweiligen Zahnrads kommt Stahl zum Einsatz. Das jeweilige Zahnrad bzw. dessen Material, also insbesondere der Stahl, kann vergütet und/oder gehärtet sein.

## Patentansprüche

1. Stirnraddifferential (1), mit:
- einem zum Umlauf um eine Differentialachse (X) vorgesehenen Planetenträger (2),
- einem ersten Ausgangsstirnrad (3), das koaxial zur Differentialachse (X) angeordnet ist,
- einem zweiten Ausgangsstirnrad (4), das ebenfalls koaxial zur Differentialachse (X) angeordnet ist, und
- zumindest einem in dem Planetenträger (2) drehbar angeordnetem Paar (5) miteinander kämmender Planetenräder (6, 7), wobei die Planetenräder (6, 7) mit je einem Ausgangsstirnrad (3, 4) kämmen,
**dadurch gekennzeichnet, dass** wenigstens eines der Ausgangsstirnräder (3, 4) und das damit kämmende Planetenrad (6, 7) und/oder die beiden miteinander kämmenden Planetenräder (6, 7) derart konisch verzahnt sind, dass, wenn sich die Planetenräder (6, 7) relativ zueinander drehen, das wenigstens eine der Ausgangsstirnräder (3, 4) und/oder der Planetenräder (6, 7) durch Beaufschlagung eines Drehmoments in eine Stellung axial bewegt wird, in der eine Sperrwirkung bewirkt wird.

2. Stirnraddifferential (1) nach Anspruch 1, wobei die Planetenräder (6, 7) des zumindest einen Paars (5) Planetenräder (6, 7) derart konisch verzahnt sind, dass, wenn sich die Planetenräder (6, 7) relativ zueinander drehen, die Planetenräder (6, 7) sich in Richtung des Planetenträgers (2) bewegen, um in eine Stellung zu gelangen, in der die Planetenräder (6, 7) gegen den Planetenträger (2) drücken und somit eine Sperrwirkung bewirken.

3. Stirnraddifferential (1) nach Anspruch 2, wobei die Planetenräder des zumindest einen Paars (5) Planetenräder (6, 7) derart konisch verzahnt sind, dass, wenn sich die Planetenräder (6, 7) relativ zueinander drehen, die Planetenräder (6, 7) sich in entgegengesetzte Richtungen bewegen, um in die Stellung zu gelangen, in der die Planetenräder (6, 7) gegen den Planetenträger (2) drücken und somit eine Sperrwirkung bewirken.

4. Stirnraddifferential (1) nach einem der vorhergehenden Ansprüche, wobei die Ausgangsstirnräder (3, 4) derart konisch verzahnt sind, dass, wenn sich die Planetenräder (6, 7) relativ zueinander drehen, die Ausgangsstirnräder (3, 4) sich relativ aufeinander zu bewegen, um in eine Stellung zu gelangen, in der die Ausgangsstirnräder (3, 4) gegeneinandergedrückt werden und somit eine Sperrwirkung bewirken, oder
wobei die Ausgangsstirnräder (3, 4) derart konisch verzahnt sind, dass, wenn sich die Planetenräder (6, 7) relativ zueinander drehen, die Ausgangsstirnräder (3, 4) sich in Richtung des Planetenträgers (2) bewegen, um in eine Stellung zu gelangen, in der die Ausgangsstirnräder (3, 4) gegen den Planetenträger (2) drücken und somit eine Sperrwirkung bewirken.

5. Stirnraddifferential (1) nach einem der vorhergehenden Ansprüche, wobei der Planetenträger (2) für jedes der Planetenräder (6, 7) einen jeweiligen definierten Reibbereich (2c) aufweist, gegen den das jeweilige Planetenrad (6, 7) drücken kann.

6. Stirnraddifferential (1) nach Anspruch 5, wobei der jeweilige Reibbereich (2c) eine Struktur, insbesondere eine Reibscheibe (2d), zur Erhöhung der Reibung zwischen dem Reibbereich (2c) und dem gegen den Reibbereich (2c) drückenden Planetenrad (6, 7) aufweist, wobei die Struktur (2c) von dem Planetenträger (2) vorzugsweise (axial) hervorsteht, und/oder
wobei der jeweilige Reibbereich (2c) eine Ausnehmung in dem Planetenträger (2) aufweist, in der vorzugsweise die Struktur (2c) aufgenommen ist.

7. Stirnraddifferential (1) nach einem der vorhergehenden Ansprüche, wobei das jeweilige Planetenrad (6, 7) einen Vorsprung (6b, 7b) zum Drücken gegen den Planetenträger (2), vorzugsweise gegen den jeweiligen Reibbereich (2c), aufweist.

8. Stirnraddifferential (1) nach einem der vorhergehenden Ansprüche, wobei das erste und/oder das zweite Ausgangsstirnrad (3, 4) jeweils einen Reibbereich aufweist, gegen den das jeweils andere Ausgangsstirnrad (3, 4) drücken kann.

9. Stirnraddifferential (1) nach Anspruch 8, wobei der jeweilige Reibbereich eine Struktur, insbesondere eine Reibscheibe, zur Erhöhung der Reibung zwischen dem Reibbereich und dem jeweils gegen den Reibbereich drückenden Ausgangsstirnrad (3, 4) aufweist, und/oder
wobei der jeweilige Reibbereich eine Ausnehmung in dem jeweiligen Ausgangsstirnrad (3, 4) aufweist, in der vorzugsweise die Struktur aufgenommen ist.

10. Stirnraddifferential (1) nach einem der vorhergehenden Ansprüche, wobei der Kopfkreisdurchmesser der jeweiligen konischen Verzahnung (3c, 4c, 6c, 7c) von einer ersten Stirnseite zu einer zweiten Stirnseite der jeweiligen konischen Verzahnung (3c, 4c, 6c, 7c) abnimmt, und wobei der Fußkreisdurchmesser der jeweiligen konischen Verzahnung (3c, 4c, 6c, 7c) von der ersten Stirnseite zu der zweiten Stirnseite der jeweiligen konischen Verzahnung (3c, 4c, 6c, 7c) gleichbleibt oder zu- oder abnimmt.

11. Stirnraddifferential (1) nach einem der vorhergehenden Ansprüche, wobei die jeweilige konische Verzahnung (3c, 4c, 6c, 7c) einen Teilkegelwinkel hat, der in einem Bereich von 3 Grad bis 45 Grad, vorzugsweise von 5 Grad bis 35 Grad, besonders bevorzugt von 10 Grad bis 30 Grad, beispielsweise von 20 Grad bis 25 Grad liegt.

12. Stirnraddifferential (1) nach einem der vorhergehenden Ansprüche, wobei die jeweilige konische Verzahnung (3c, 4c, 6c, 7c) wenigstens durch eine Entformungsschräge zur Herstellung des jeweiligen wenigstens einen der Ausgangsstirnräder (3, 4) und/oder der Planetenräder (6, 7) gebildet ist.

13. Stirnraddifferential (1) nach einem der vorhergehenden Ansprüche, wobei die Planetenräder (6, 7) und/oder die Ausgangsstirnräder (3, 4) in einem Umformverfahren, insbesondere in einem Druckumformverfahren, hergestellt sind,
wobei das Umformverfahren vorzugsweise Schmieden, insbesondere Gesenkschmieden, ist.

14. Stirnraddifferential (1) nach einem der vorhergehenden Ansprüche, mit zumindest zwei, drei, vier, fünf oder sechs in dem Planetenträger (2) drehbar angeordneten Paaren (5) miteinander kämmender Planetenräder (6, 7).

15. Verfahren zur Herstellung eines Stirnraddifferentials (1) nach einem der vorhergehenden Ansprüche, aufweisend die folgenden Schritte:
- Bereitstellen eines zum Umlauf um eine Differentialachse (X) vorgesehenen Planetenträgers (2),
- Bereitstellen eines ersten Ausgangsstirnrads (3) koaxial zur Differentialachse (X),
- Bereitstellen eines zweiten Ausgangsstirnrads (4) koaxial zur Differentialachse (X),
- Bereitstellen zumindest eines drehbar angeordneten Paars (5) miteinander kämmender Planetenräder (6, 7) in dem Planetenträger (2), sodass die Planetenräder (6, 7) mit je einem Ausgangsstirnrad (3, 4) kämmen.

## Claims

1. Spur gear differential (1), comprising:
- a planetary gear carrier (2) which is provided to rotate around a differential axis (X),
- a first output spur gear (3) which is arranged coaxially to the differential axis (X),
- a second output spur gear (4) which is also coaxial to the differential axis (X), and
- at least one pair (5) of intermeshing planetary gears (6, 7) rotatably arranged in the planetary gear carrier (2), wherein the planetary gears (6, 7) mesh with in each case one output spur gear (3, 4),
**characterized in that**
at least one of the output spur gears (3, 4) and the planetary gear (6, 7) meshing with it and/or the two intermeshing planetary gears (6, 7) are conically toothed in such a way that when the planetary gears (6, 7) rotate relative to one another, the at least one of the output spur gears (3, 4) and/or of the planetary gears (6, 7) is axially moved, by application of a torque, to a position in which a locking effect is effected.

2. Spur gear differential (I) according to claim 1, wherein the planetary gears (6, 7) of the at least one pair (5) of planetary gears (6, 7) are conically toothed such that when the planetary gears (6, 7) rotate relative to each other, the planetary gears (6, 7) move in the direction of the planetary gear carrier (2) to reach a position in which the planetary gears (6, 7) press against the planetary gear carrier (2) and thus provide a locking effect.

3. Spur gear differential (1) according to claim 2, wherein the planetary gears of the at least one pair (5) of planetary gears (6, 7) are conically toothed such that when the planetary gears (6, 7) rotate relative to one another, the planetary gears (6, 7) move in opposite directions to reach the position in which the planetary gears (6, 7) press against the planetary gear carrier (2) and thus cause a locking effect.

4. Spur gear differential (1) according to any one of the preceding claims,
wherein the output spur gears (3, 4) are conically toothed such that when the planetary gears (6, 7) rotate relative to one another, the output spur gears (3, 4) move relative to one another to reach a position in which the output spur gears (3, 4) are pressed against one another and thus cause a locking effect, or
wherein the output spur gears (3, 4) are conically toothed in such a way that when the planetary gears (6, 7) rotate relative to one another, the output spur gears (3, 4) move in the direction of the planetary gear carrier (2) to reach a position in which the output spur gears (3, 4) press against the planetary gear carrier (2) and thus cause a locking effect.

5. Spur gear differential (1) according to any one of the preceding claims,
wherein the planetary gear carrier (2) comprises, for each of the planetary gears (6, 7), a respective defined friction region (2c) against which the respective planetary gear (6, 7) can press.

6. Spur gear differential (1) according to claim 5, wherein the respective friction region (2c) comprises a structure, in particular a friction disk (2d), for increasing the friction between the friction region (2c) and the planetary gear (6, 7) pressing against the friction region (2c), wherein the structure (2c) preferably protrudes (axially) from the planetary gear carrier (2), and/or
wherein the respective friction region (2c) comprises a recess in the planetary gear carrier (2) in which the structure (2c) is preferably received.

7. Spur gear differential (1) according to any one of the preceding claims, wherein the respective planetary gear (6, 7) comprises a projection (6b, 7b) for pressing against the planetary gear carrier (2), preferably against the respective friction region (2c).

8. Spur gear differential (1) according to any one of the preceding claims,
wherein the first and/or the second output spur gear (3, 4) each comprises a friction region against which the respective other output spur gear (3, 4) can press.

9. Spur gear differential (1) according to claim 8, wherein the respective friction region comprises a structure, in particular a friction disk, for increasing the friction between the friction region and the output spur gear (3, 4) pressing against the friction region, and/or
wherein the respective friction region comprises a recess in the respective output spur gear (3, 4), in which the structure is preferably accommodated.

10. Spur gear differential (1) according to any one of the preceding claims, wherein the head circle diameter of the respective conical toothing (3c, 4c, 6c, 7c) decreases from a first end face to a second end face of the respective conical toothing (3c, 4c, 6c, 7c), and wherein the root circle diameter of the respective conical toothing (3c, 4c, 6c, 7c) from the first end face to the second end face of the respective conical toothing (3c, 4c, 6c, 7c) remains the same, or increases or decreases.

11. Spur gear differential (1) according to any one of the preceding claims, wherein the respective conical toothing (3c, 4c, 6c, 7c) has a partial cone angle which is in a range from 3 degrees to 45 degrees, preferably from 5 degrees to 35 degrees, particularly preferably from 10 degrees to 30 degrees, for example from 20 degrees to 25 degrees.

12. Spur gear differential (1) according to any one of the preceding claims, wherein the respective conical toothing (3c, 4c, 6c, 7c) is formed at least by a draft angle for producing the respective at least one of the output spur gears (3, 4) and/or the planetary gears (6, 7).

13. Spur gear differential (1) according to any one of the preceding claims,
wherein the planetary gears (6, 7) and/or the output spur gears (3, 4) are manufactured in a forming process, in particular in a pressure forming process,
wherein the forming process preferably is forging, especially drop forging.

14. Spur gear differential (1) according to any one of the preceding claims, comprising at least two, three, four, five or six pairs (5) of intermeshing planetary gears (6, 7) rotatably arranged in the planetary gear carrier (2).

15. Method for producing a spur gear differential (1) according to any one of the preceding claims, comprising the following steps:
- providing a planetary gear carrier (2) provided for rotation around a differential axis (X),
- providing a first output spur gear (3) coaxial to the differential axis (X),
- providing a second output spur gear (4) coaxial to the differential axis (X),
- providing at least one rotatably arranged pair (5) of intermeshing planetary gears (6, 7) in the planetary gear carrier (2), so that the planetary gears (6, 7) mesh with in each case one output spur gear (3, 4).

## Revendications

1. Différentiel à roue droite (1) avec :
- un porte-satellites (2) prévu pour tourner autour d'un axe de différentiel (X),
- une première roue droite de sortie (3) qui est agencée de manière coaxiale à l'axe de différentiel (X),
- une deuxième roue droite de sortie (4) qui est aussi agencée de manière coaxiale à l'axe de différentiel (X), et
- au moins une paire (5) de roues planétaires (6, 7) s'engrenant l'une avec l'autre agencée de manière rotative dans le porte-satellites (2), dans lequel les roues planétaires (6, 7) s'engrènent chacune avec une roue droite de sortie (3, 4),
**caractérisé en ce qu'**au moins une des roues droites de sortie (3, 4) et la roue planétaire (6, 7) s'engrenant avec celle-ci et/ou les deux roues planétaires (6, 7) s'engrenant entre elles sont dentées de manière conique de telle manière que lorsque les roues planétaires (6, 7) tournent l'une par rapport à l'autre, l'au moins une des roues droites de sortie (3, 4) et/ou des roues planétaires (6, 7) est déplacée axialement par alimentation d'un couple dans une position, dans laquelle une action de blocage est provoquée.

2. Différentiel à roue droite (1) selon la revendication 1, dans lequel les roues planétaires (6, 7) de l'au moins une paire (5) de roues planétaires (6, 7) sont dentées de manière conique de telle manière que lorsque les roues planétaires (6, 7) tournent l'une par rapport à l'autre, les roues planétaires (6, 7) se déplacent en direction du porte-satellites (2) afin de parvenir dans une position, dans laquelle les roues planétaires (6, 7) pressent contre le porte-satellites (2) et provoquent ainsi une action de blocage.

3. Différentiel à roue droite (1) selon la revendication 2, dans lequel les roues planétaires de l'au moins une paire (5) de roues planétaires (6, 7) sont dentées de manière conique de telle manière que lorsque les roues planétaires (6, 7) tournent l'une par rapport à l'autre, les roues planétaires (6, 7) se déplacent dans des sens opposés afin de parvenir dans la position, dans laquelle les roues planétaires (6, 7) pressent contre le porte-satellites (2) et provoquent ainsi une action de blocage.

4. Différentiel à roue droite (1) selon l'une quelconque des revendications précédentes, dans lequel les roues droites de sortie (3, 4) sont dentées de manière conique de telle manière que lorsque les roues planétaires (6, 7) tournent l'une par rapport à l'autre, les roues droites de sortie (3, 4) se déplacent l'une vers l'autre afin de parvenir dans une position, dans laquelle les roues droites de sortie (3, 4) sont pressées l'une contre l'autre et provoquent ainsi une action de blocage ou
dans lequel les roues droites de sortie (3, 4) sont dentées de manière conique de telle manière que lorsque les roues planétaires (6, 7) tournent l'une par rapport à l'autre, les roues droites de sortie (3, 4) se déplacent en direction du porte-satellites (2) afin de parvenir dans une position, dans laquelle les roues droites de sortie (3, 4) pressent contre le porte-satellites (2) et provoquent ainsi une action de blocage.

5. Différentiel à roue droite (1) selon l'une quelconque des revendications précédentes, dans lequel le porte-satellites (2) pour chacune des roues planétaires (6, 7) présente une zone de friction (2c) définie respective, contre laquelle la roue planétaire (6, 7) respective peut presser.

6. Différentiel à roue droite (1) selon la revendication 5, dans lequel la zone de friction (2c) respective présente une structure, en particulier un disque de friction (2d), pour l'augmentation de la friction entre la zone de friction (2c) et la roue planétaire (6, 7) pressant contre la zone de friction (2c), dans lequel la structure (2c) dépasse du porte-satellites (2) de préférence (axialement), et/ou
dans lequel la zone de friction (2c) respective présente un évidement dans le porte-satellites (2), dans lequel la structure (2c) est de préférence reçue.

7. Différentiel à roue droite (1) selon l'une quelconque des revendications précédentes, dans lequel la roue planétaire (6, 7) respective présente une saillie (6b, 7b) pour la pression contre le porte-satellites (2), de préférence contre la zone de friction (2c) respective.

8. Différentiel à roue droite (1) selon l'une quelconque des revendications précédentes, dans lequel la première et/ou la deuxième roue droite de sortie (3, 4) présente respectivement une zone de friction, contre laquelle l'autre roue droite de sortie (3, 4) respectivement peut presser.

9. Différentiel à roue droite (1) selon la revendication 8, dans lequel la zone de friction respective présente une structure, en particulier un disque de friction, pour l'augmentation de la friction entre la zone de friction et la roue droite de sortie (3, 4) pressant respectivement contre la zone de friction, et/ou
dans lequel la zone de friction respective présente un évidement dans la roue droite de sortie (3, 4) respective, dans lequel la structure est de préférence reçue.

10. Différentiel à roue droite (1) selon l'une quelconque des revendications précédentes, dans lequel le diamètre de cercle de tête de la denture (3c, 4c, 6c, 7c) conique respective diminue d'un premier côté avant à un deuxième côté avant de la denture (3c, 4c, 6c, 7c) conique respective, et dans lequel le diamètre de cercle de pied de la denture (3c, 4c, 6c, 7c) conique respective reste constant ou augmente ou diminue du premier côté avant au deuxième côté avant de la denture (3c, 4c, 6c, 7c) conique respective.

11. Différentiel à roue droite (1) selon l'une quelconque des revendications précédentes, dans lequel la denture (3c, 4c, 6c, 7c) conique respective présente un angle de cône partiel qui se trouve dans une plage de 3 degrés à 45 degrés, de préférence de 5 degrés à 35 degrés, de manière particulièrement préférée de 10 degrés à 30 degrés, par exemple de 20 degrés à 25 degrés.

12. Différentiel à roue droite (1) selon l'une quelconque des revendications précédentes, dans lequel la denture (3c, 4c, 6c, 7c) conique respective est formée au moins par un biais de déformation pour la fabrication d'au moins une respective des roues droites de sortie (3, 4) et/ou des roues planétaires (6, 7).

13. Différentiel à roue droite (1) selon l'une quelconque des revendications précédentes, dans lequel les roues planétaires (6, 7) et/ou les roues droites de sortie (3, 4) sont fabriquées dans un procédé de déformation, en particulier dans un procédé de déformation plastique par compression,
dans lequel le procédé de déformation est de préférence le forgeage, en particulier l'estampage.

14. Différentiel à roue droite (1) selon l'une quelconque des revendications précédentes, avec au moins deux, trois, quatre, cinq ou six paires (5) agencées de manière rotative dans le porte-satellites (2) de roues planétaires (6, 7) s'engrenant l'une avec l'autre.

15. Procédé de fabrication d'un différentiel à roue droite (1) selon l'une quelconque des revendications précédentes, présentant les étapes suivantes :
- la fourniture d'un porte-satellites (2) prévu pour tourner autour d'un axe de différentiel (X),
- la fourniture d'une première roue droite de sortie (3) coaxiale à l'axe de différentiel (X),
- la fourniture d'une deuxième roue droite de sortie (4) coaxiale à l'axe de différentiel (X),
- la fourniture au moins d'une paire (5) agencée de manière rotative de roues planétaires (6, 7) s'engrenant l'une avec l'autre dans le porte-satellites (2) de sorte que les roues planétaires (6, 7) s'engrènent chacune avec une roue droite de sortie (3, 4).
